# EUROPÄISCHE PATENTANMELDUNG

(11) **EP 0 919 434 A2**
(43) Veröffentlichungstag der Anmeldung: **02.06.1999**
(21) Anmeldenummer: 98121892.8
(22) Anmeldetag: 18.11.1998
(51) Int. Cl.: B60Q 1/44

(54) **Bremslicht-Steuereinrichtung**

(30) Priorität: 25.11.1997 DE 19752136
(71) Anmelder: ROBERT BOSCH GMBH, 70442 Stuttgart (DE)
(72) Erfinder: Knecht, Gerhard, 76473 Iffezheim (DE)

(57) **Zusammenfassung**

Die Erfindung bezieht sich auf eine Bremslicht-Steuereinrichtung mit einer Erfassungseinrichtung (6,8,2) zum Feststellen einer Bremswirkung und einer Ansteuerschaltung (4,11), mit der Bremsleuchten (12) mit zeitlich in Abhängigkeit der Bremswirkung veränderbaren Signalen ansteuerbar sind. Mit einfachen Maßnahmen wird eine genaue Anpassung an gegebene Bremssituationen dadurch erzielt, daß die Ansteuerschaltung (4, 11) über eine Buskopplung (3) mit einem Antriebsstrangubus (1) verbunden ist, dem Daten der Bremswirkung zugeführt werden, und daß die Ansteuerschaltung (4, 11) aus den Daten der Bremswirkung die veränderbaren Signale zur Ansteuerung der Bremsleuchten (12) bildet.

## Beschreibung

### Stand der Technik

Die Erfindung bezieht sich auf eine Bremslicht-Steuereinrichtung mit einer Erfassungseinrichtung zum Feststellen einer Bremswirkung und einer Ansteuerschaltung, mit der Bremsleuchten mit zeitlich in Abhängigkeit der Bremswirkung veränderbaren Signalen ansteuerbar sind.

Eine derartige Bremslicht-Steuereinrichtung ist in der DE 39 40 867 A1 als bekannt ausgewiesen. Bei dieser bekannten Bremslicht-Steuereinrichtung werden bei einem starken Abbremsen die Bremslichter automatisch dadurch zum rhythmischen Aufleuchten gebracht, daß die von einem ABS-Impulsgeber gelieferten Signale für die Ansteuerung der Bremslichter unmittelbar mit verwendet werden. Bei einer derartigen Erzeugung des Blinkbetriebes der Bremsleuchten kann der Blinkbetrieb zu spät einsetzen oder in Abhängigkeit von der Fahrbahnbeschaffenheit unterschiedlich sein.

In der DE 40 35 185 A1 ist eine weitere Bremslicht-Steuereinrichtung vorgeschlagen, bei der Blinkintervalle in Abhängigkeit von einer Bremswirkung erzeugt werden. Hierbei sind für die Abgabe des Blinklichts zusätzliche Bremsleuchten vorgesehen. Die Erfassung der Bremswirkung erfolgt über einen Fliehkraftregelwiderstand.

Der Erfindung liegt die Aufgabe zugrunde, eine Bremslicht-Steuereinrichtung der eingangs angegebenen Art bereitzustellen, die bei einfachem Aufbau eine bessere Abstimmung auf jeweilige Bremssituationen ergibt.

Diese Aufgabe wird mit den Merkmalen des Anspruches 1 gelöst. Hiernach ist vorgesehen, daß die Ansteuerschaltung über eine Buskopplung mit einem Antriebsstrangbus verbunden ist, dem Daten der Bremswirkung zugeführt werden, und daß die Ansteuerschaltung aus den Daten der Bremswirkung die veränderbaren Signale zur Ansteuerung der Bremsleuchten bildet.

Die Ausnutzung der Daten des Antriebsstrangbusses in der Steuerschaltung ermöglicht es, mit relativ wenig Aufwand, z.B. durch entsprechende Software, unter Ausnutzung von im Fahrzeug bereits vorhandener Einrichtungen und erzeugter Daten die Ansteuerung der Bremslichter optimal auf eine gegebene Bremssituation abzustimmen, beispielsweise durch entsprechend auffällige Blinkfrequenzen oder Änderung der Lichtstärke, wobei auch die Eigenschaften der angesteuerten Lampen günstig berücksichtigt werden können.

Die Anpassung an gegebene Bedingungen und die Abstimmung auf eine gewünschte Signalisierung wird vorteilhaft dadurch ermöglicht, daß die Ansteuerschaltung zum Bilden der veranderbaren Signale eine Programmierstufe aufweist, in der die veränderbaren Signale in Abhängigkeit der Daten der Bremswirkung nach einem Programm errechenbar sind.

Der Aufbau wird weiterhin dadurch vereinfacht, daß die Ansteuerschaltung an einen Karosseriebus angeschlossen ist, der über die Buskopplung mit dem Antriebsstrangbus verbunden ist, wobei weitere Einrichtungen des Fahrzeuges vorteilhaft genutzt werden können.

Die Steuereinrichtung läßt sich- leicht in das Fahrzeug integrieren, wenn vorgesehen ist, daß die Ansteuerschaltung Teil einer Karosseriezentralelektronik ist. Für den Aufbau und die Wirkungsweise besteht eine weitere günstige Maßnahme darin, daß die Ansteuerschaltung mit einer Heckelektronik zusammenwirkt, von der die veränderbaren Signale abgegeben werden oder beeinflußbar sind.

Eine frühzeitige Erkennung einer Bremsbetätigung und eine geeignete Abstimmung auf die Bremswirkung wird dadurch unterstützt, daß der Antriebsstrangbus über eine ABS-Einrichtung mit einem Bremspedalschalter gekoppelt ist.

Die Auswertung kann weiterhin dadurch begünstigt werden, daß der Bremspedalschalter zusätzlich über eine Anschlußleitung mit der Ansteuerschaltung verbunden ist, da das Signal des Bremspedalschalters auf diese Weise unmittelbar zur Verfügung steht.

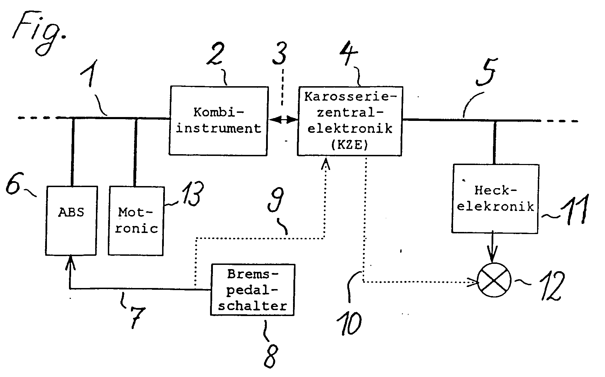

Die Erfindung wird nachfolgend anhand eines Ausführungsbeispiels unter Bezugnahme auf die Zeichnung näher erläutert.

Die Fig. zeigt in schematischer Darstellung eine Bremslicht-Steuereinrichtung mit einem Antriebsstrangbus 1, der über eine Buskopplung 3 bzw. ein Gateway mit einem Karosseriebus 5 gekoppelt ist, wobei im Bereich der Buskopplung an dem Antriebsstrangbus 1 ein Kombiinstrument 2 und an dem Karosseriebus 5 eine Karosseriezentralelektronik angeschlossen sind.

Auf den Antriebsstrangbus 1 werden Daten einer ABS-Einrichtung 6 gegeben, die über eine Verbindung 7 an einen Bremspedalschalter 8 angeschlossen ist, so daß auch Daten des Bremspedalschalters 8 auf den Antriebsstrangbus 1 gelangen. Im übrigen nimmt der Antriebsstrangbus 1 auch Daten einer Motorelektronik 13 auf. Von dem Bremspedalschalter kann auch unmittelbar eine Anschlußleitung 9 zu der Karosseriezentralelektronik geführt werden, wie mit einer gestrichelten Linie angegeben.

Von dem Karosseriebus 5 führt über eine Heckelektronik 11 eine Ansteuerleitung zu Bremsleuchten 12. Die Karosserieelektronik 4 kann auch unmittelbar über eine weitere Anschlußleitung 10 mit den Bremsleuchten 12 verbunden sein.

Die über den Antriebsstrangbus 1 fließenden Daten werden von einer in der Karosseriezentralelektronik 4 und/oder Heckelektronik 11 ausgebildeten Ansteuerschaltung erfaßt und hinsichtlich der Bremswirkung ausgewertet, um eine Ansteuerung der Bremsleuchten 12 in Abhängigkeit von der Bremswirkung, beispielsweise eine veränderbare Blinkfrequenz oder Lichtstärke, zu erzeugen. Die Ansteuerschaltung weist dazu beispielsweise eine Programmierstufe auf, in der die zeitlich veränderbaren Signale zur Ansteuerung der Bremsleuchten 12 in Abhängigkeit von der Bremswirkung beispielsweise gemäß einer vorgegebenen Kennlinie bzw. Tabelle errechenbar sind. Auch kann mit der Programmierstufe eine einfache Anpassung an gegebene oder geänderte Bedingungen vorgenommen werden.

## Patentansprüche

1. Bremslicht-Steuereinrichtung mit einer Erfassungseinrichtung (6,8,2) zum Feststellen einer Bremswirkung und einer Ansteuerschaltung (4, 11), mit der Bremsleuchten (12) mit zeitlich in Abhängigkeit der Bremswirkung veränderbaren Signalen ansteuerbar sind,
dadurch gekennzeichnet,
daß die Ansteuerschaltung (4, 11) über eine Buskopplung (3) mit einem Antriebsstrangbus (1) verbunden ist, dem Daten der Bremswirkung zugeführt werden, und
daß die Ansteuerschaltung (4, 11) aus den Daten der Bremswirkung die veränderbaren Signale zur Ansteuerung der Bremsleuchten (12) bildet.

2. Steuereinrichtung nach Anspruch 1,
dadurch gekennzeichnet,
daß die Ansteuerschaltung (4, 11) zum Bilden der veränderbaren Signale eine Programmierstufe aufweist, in der die veränderbaren Signale in Abhängigkeit der Daten der Bremswirkung nach einem Programm errechenbar sind.

3. Steuereinrichtung nach Anspruch 1 oder 2,
dadurch gekennzeichnet,
daß die Ansteuerschaltung (4, 11) an einen Karosseriebus (5) angeschlossen ist, der über die Buskopplung (3) mit dem Antriebsstrangbus (1) verbunden ist.

4. Steuereinrichtung nach einem der vorhergehenden Ansprüche,
dadurch gekennzeichnet,
daß die Ansteuerschaltung (4) Teil einer Karosseriezentralelektronik (4) ist.

5. Steuereinrichtung nach einem der vorhergehenden Ansprüche, dadurch gekennzeichnet,
daß die Ansteuerschaltung (4) mit einer Heckelektronik (11) zusammenwirkt, von der die veränderbaren Signale abgegeben werden oder beeinflußbar sind.

6. Steuereinrichtung nach einem der vorhergehenden Ansprüche,
dadurch gekennzeichnet,
daß der Antriebsstrangbus (1) über eine ABS-Einrichtung mit einem Bremspedalschalter (8) gekoppelt ist.

7. Steuereinrichtung nach einem der vorhergehenden Ansprüche,
dadurch gekennzeichnet,
daß der ßremspedalschalter (8) zusätzlich über eine Anschlußleitung (9) mit der Ansteuerschaltung (4, 11) verbunden ist.
